# EUROPEAN PATENT APPLICATION

(11) **EP 4 576 312 A1**
(43) Date of publication of application: **25.06.2025**
(21) Application number: 23218409.3
(22) Date of filing: 20.12.2023
(51) Int. Cl.: H01M 10/42, H01M 10/48

(54) **BATTERY MODULE AND OPERATING METHOD**

(71) Applicant: NXP B.V., 5656 AG Eindhoven (NL)
(72) Inventor: Haslinger, Dorian, 5656AG Eindhoven (NL); Manninger, Marc, 5656AG Eindhoven (NL); Khullar, Naman, 5656AG Eindhoven (NL)
(74) Representative: Krott, Michel

(57) **Abstract**

In accordance with a first aspect of the present disclosure, a battery module is provided, comprising: one or more battery cells; a battery module controller operatively coupled to the battery cells, wherein said battery module controller is configured to determine a state of the battery cells; a secure element operatively coupled to the battery module controller, wherein the secure element is configured to store data indicative of the state of the battery cells as determined by the battery module controller; an interface unit operatively coupled to the secure element, wherein said interface unit is configured to receive a request for evaluating said data from an external user device. In accordance with a second aspect of the present disclosure, a corresponding method of operating a battery module is conceived.

## Description

### TECHNICAL FIELD

The present disclosure relates to a battery module. Furthermore, the present disclosure relates to a corresponding method of operating a battery module.

### BACKGROUND

Battery modules may be used in different systems and applications. A battery module may be defined as a component of a battery pack, which includes one or more battery cells as well as a battery module controller which is coupled to said battery cells. For example, electric vehicles typically contain battery packs, which in turn contain a plurality of battery modules. Furthermore, battery modules may be used in smart home environments. It is desirable to enable reusing such battery modules. For example, when battery modules reach a certain age they can no longer be used in an electric vehicle, but they may still be used in a smart home. In particular, such battery modules may be resold. However, current resale solutions for used battery modules may not be user-friendly and secure enough.

### SUMMARY

In accordance with a first aspect of the present disclosure, a battery module is provided, comprising: one or more battery cells; a battery module controller operatively coupled to the battery cells, wherein said battery module controller is configured to determine a state of the battery cells; a secure element operatively coupled to the battery module controller, wherein the secure element is configured to store data indicative of the state of the battery cells as determined by the battery module controller; an interface unit operatively coupled to the secure element, wherein said interface unit is configured to receive a request for evaluating said data from an external user device.

In one or more embodiments, the secure element is configured to perform an evaluation of the data in response to receiving said request from the interface unit.

In one or more embodiments, the secure element is configured to perform said evaluation by comparing the stored data with reference data received from the external device and by concluding that the evaluation has a positive result if the stored data match with the reference data within a predefined error margin.

In one or more embodiments, the interface unit is further configured to transmit an evaluation result to the external user device, wherein said evaluation result is indicative of the evaluation performed on the data.

In one or more embodiments, the data indicative of the state of the battery cells includes data indicative of a state of health of the battery cells, data indicative of a lifecycle of the battery cells, data indicative of re-charging cycles of the battery cells, and/or data indicative of a manufacturer of the battery module.

In one or more embodiments, the secure element contains signed certificates issued by a root certificate authority.

In one or more embodiments, the interface unit is integrated with the secure element.

In one or more embodiments, the interface unit is a near field communication (NFC) interface unit.

In one or more embodiments, the battery module controller is integrated with the secure element.

In one or more embodiments, a battery module resale system comprises: a battery module of the kind set forth; a user device configured to transmit a request for evaluating data to the battery module, wherein said data are indicative of the state of the battery cells included in the battery module.

In one or more embodiments, the user device is an NFC-enabled user device.

In accordance with a second aspect of the present disclosure, a method of operating a battery module is conceived, comprising: determining, by a battery module controller included in the battery module, a state of one or more battery cells included in the battery module; storing, by a secure element included in the battery module, data indicative of the state of the battery cells as determined by the battery module controller; receiving, by an interface unit included in the battery module, a request for evaluating said data from an external user device.

In one or more embodiments, the secure element performs an evaluation of the data in response to receiving said request from the interface unit.

In one or more embodiments, the secure element performs said evaluation by comparing the stored data with reference data received from the external device and by concluding that the evaluation has a positive result if the stored data match with the reference data within a predefined error margin.

In one or more embodiments, the interface unit further transmits an evaluation result to the external user device, wherein said evaluation result is indicative of the evaluation performed on the data.

### DESCRIPTION OF DRAWINGS

Embodiments will be described in more detail with reference to the appended drawings.
Fig. 1 shows an example of an electric vehicle.
Fig. 2 shows an example of a smart home.
Fig. 3 shows an illustrative embodiment of a battery module.
Fig. 4 shows an illustrative embodiment of a method of operating a battery module.
Fig. 5 shows an illustrative embodiment of a public key infrastructure scheme.
Fig. 6 shows an illustrative embodiment of a resale process.
Fig. 7 shows an illustrative embodiment of an online resale scenario for user A.
Fig. 8 shows an illustrative embodiment of an online purchasing scenario for user X.
Fig. 9 shows an illustrative embodiment of a process of enabling an online resale of a battery module.

### DESCRIPTION OF EMBODIMENTS

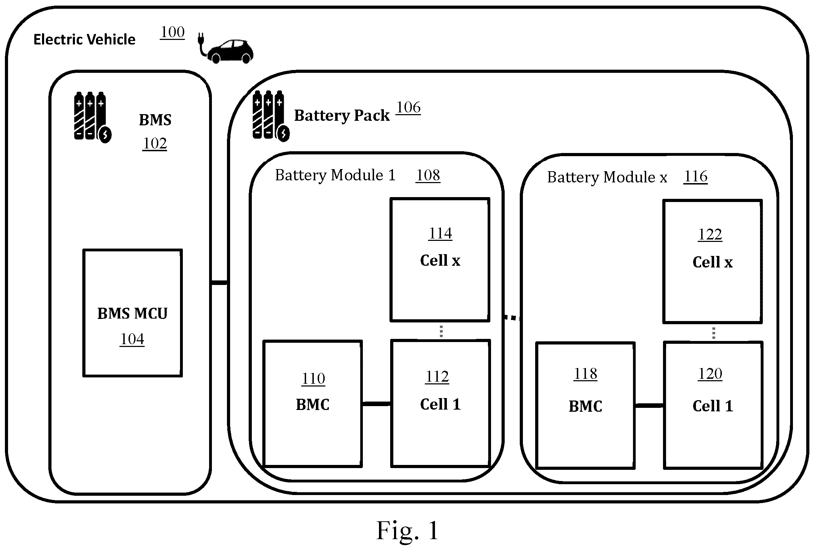

**Fig. 1** shows an example of an electric vehicle 100. The vehicle 100 comprises a battery pack 106 and a battery management system 102, which are operatively coupled to each other. The battery pack 106 comprises two or more battery modules 108, 116. Each of the battery modules 108, 116 comprises two or more battery cells 112, 114, 120, 122 and a battery module controller 110, 118 operatively coupled to the battery cells 112, 114. Furthermore, the battery management system 102 comprises a microcontroller 104. It is desirable to enable reusing the battery modules 108, 116. For example, when the battery modules 108, 116 reach a certain age they can no longer be used in the electric vehicle 100, but they may still be used in another system or application, for example in a smart home. Reusing the battery modules 108, 116 may be facilitated by trading platforms via which the battery modules 108, 116 can be resold.

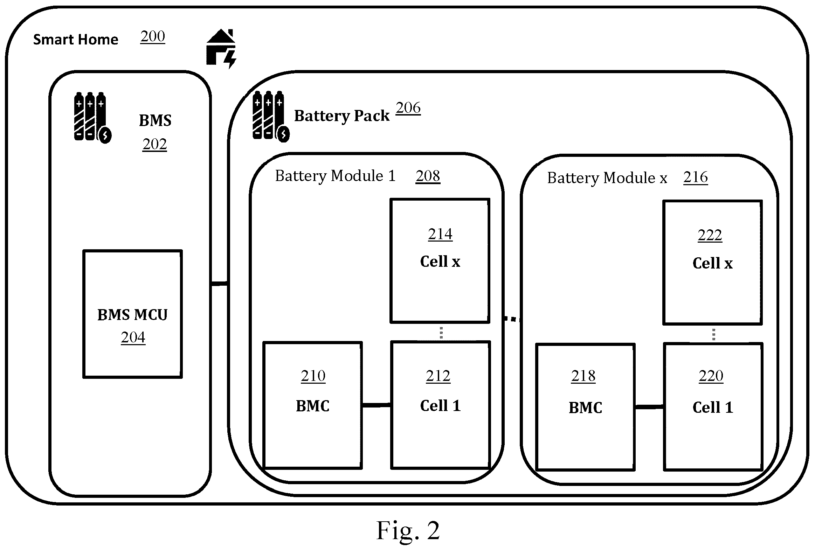

**Fig. 2** shows an example of a smart home 200. The smart home 200 comprises a battery pack 206 and a battery management system 202, which are operatively coupled to each other. The battery pack 206 comprises two or more battery modules 208, 216. Each of the battery modules 208, 216 comprises two or more battery cells 212, 214, 220, 222 and a battery module controller 210, 218 operatively coupled to the battery cells 212, 214, 220, 222. Furthermore, the battery management system 202 comprises a microcontroller 204. The battery modules 208, 216 may be modules that have been used in another system or application, for example as a power source for an electric vehicle. In particular, the battery modules 208, 216 may have been resold. However, as mentioned above, current resale solutions for used battery modules may not be user-friendly and secure enough.

Now discussed are a battery module and a corresponding method of operating a battery module, which facilitate providing a resale solution for used battery modules that is user-friendly as well as secure.

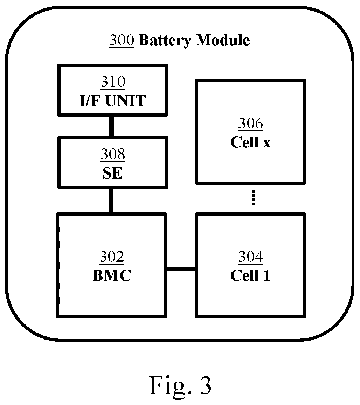

**Fig. 3** shows an illustrative embodiment of a battery module 300. The battery module 300 contains a battery module controller 302, battery cells 304, 306, a secure element 308, and an interface unit 310. The battery module controller 302 is operatively coupled to the battery cells 304, 306 and is configured to determine a state of the battery cells 304, 306. Furthermore, the secure element 308 is operatively coupled to the battery module controller 302 and is configured to store data indicative of the state of the battery cells 304, 306 as determined by the battery module controller 302. Furthermore, the interface unit 310 is operatively coupled to the secure element 308 and is configured to receive a request for evaluating said data from an external user device (not shown). Since data indicative of the state of the battery cells 304, 306 is securely stored in the secure element and retrievable through the interface unit, a user wanting to offer the battery module 300 for sale or wanting to purchase the battery module 300 can easily access the securely stored data indicative of the state of the battery cells 302, 304. These data may be relevant for the sales offer and purchase, respectively. In this way, the battery module 300 facilitates providing a resale solution for used battery modules that is user-friendly as well as secure. It is noted that a secure element may be defined as a tamper-resistant integrated circuit with installed applications, which have a prescribed functionality and a prescribed level of security. Furthermore, a secure element may implement security functions, such as cryptographic functions and authentication functions.

It is noted that, although the interface unit 310 is shown as a separate unit that is coupled to the secure element 308, it may also be integrated into another one of the components (e.g., the secure element 308) or it may be coupled to another one of the components (e.g., the battery module controller 302). The interface unit 310 may be implemented, for example, as a typical NFC interface included in or connected to a secure element which is powered by the field. Alternatively, the interface unit 310 may be a Bluetooth low energy (BLE) interface unit, a Wi-Fi interface unit, or another wireless interface unit. Furthermore, the interface unit 310 may act as a host for both the secure element 308 and the battery module controller 302.

In one or more embodiments, the secure element is configured to perform an evaluation of the data in response to receiving said request from the interface unit. In this way, the battery module may autonomously and securely perform an evaluation of the state of the battery cells. For example, the battery module may autonomously and securely perform a diagnostic check of the state of the battery cells, which may be relevant for a sales offer or a purchase of the battery module. In one or more embodiments, the secure element is configured to perform said evaluation by comparing the stored data with reference data received from the external device and by concluding that the evaluation has a positive result if the stored data match with the reference data within a predefined error margin. In this way, the output of the evaluation may easily be verified against an expected result, which for example facilitates performing a diagnostic check. Furthermore, in one or more embodiments, the interface unit is further configured to transmit an evaluation result to the external user device, wherein said evaluation result is indicative of the evaluation performed on the data. In this way, the user may easily be informed about the evaluation result, for example through a user interface embedded in the user device. In an example, newly stored data may be compared with reference data that reflects a previous state of health of the battery module. In that case, the newly stored data is expected to indicate a state of health which is not better than or approximately equal to the previous state of health. Furthermore, the reference data may reflect data (e.g., so-called "big data") that has been collected from other battery modules.

In one or more embodiments, the data indicative of the state of the battery cells includes data indicative of a state of health of the battery cells, data indicative of a lifecycle of the battery cells, data indicative of re-charging cycles of the battery cells, and/or data indicative of a manufacturer of the battery module. In this way, specific data which is relevant for a sales offer or a purchase may easily and securely be provided to a user. In one or more embodiments, the secure element contains signed certificates issued by a root certificate authority. In this way, communications between the battery module and the user device, as well as between the user device and a service provider to which the relevant data may be forwarded, may be carried out in a secure manner. In one or more embodiments, the interface unit is integrated with the secure element. In this way, the level of security may be further increased, since all communications through the interface unit are carried out in the protected environment of the secure element. In one or more embodiments, the interface unit is a near field communication (NFC) interface unit. In this way, the user convenience is further increased. Furthermore, in case a battery module has lost its power (e.g., when it is empty) or in case the power supply became damaged when it was opened, using an NFC interface unit may enable powering the secure element by the field, such that battery-relevant data can still be read from said secure element. Furthermore, in one or more embodiments, the battery module controller is integrated with the secure element. In this way, the level of security may be further increased, since determining the state of the battery cells is carried out in the protected environment of the secure element.

In one or more embodiments, a battery module resale system comprises a battery module of the kind set forth, as well as a user device configured to transmit a request for evaluating data to the battery module, wherein said data are indicative of the state of the battery cells included in the battery module. In this way, a user-convenient and secure battery module resale system may be provided. Furthermore, in one or more embodiments, the user device is an NFC-enabled user device. In this way, the user convenience is further increased.

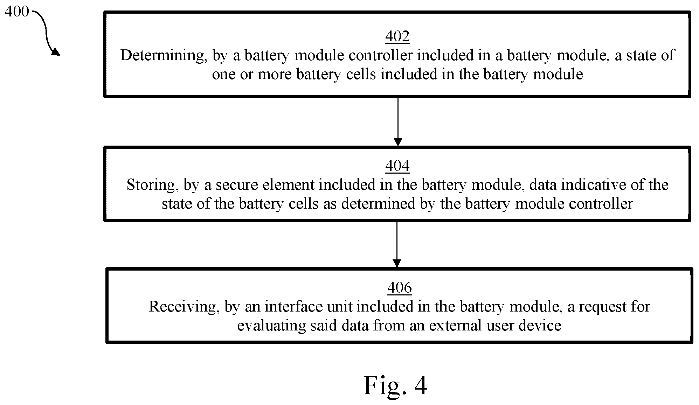

**Fig. 4** shows an illustrative embodiment of a method 400 of operating a battery module. The method 400 comprises the following steps. At 402, a battery module controller included in a battery module determines a state of one or more battery cells included in the battery module. At 404, a secure element included in the battery module stores data indicative of the state of the battery cells as determined by the battery module controller. Furthermore, at 406, an interface unit included in the battery module receives a request for evaluating said data from an external user device. As explained with reference to the corresponding battery module shown in Fig. 3, the method 400 facilitates providing a resale solution for used battery modules that is user-friendly as well as secure.

It is noted that battery modules that are embedded in electric vehicles have a high potential for a second-life use case. However, reusing a battery module typically requires a complex offline check of the battery modules to verify their value, in particular by performing a check of the state of the battery cells included in the modules. The presently disclosed battery module and corresponding operating method make this check easier to perform, and also provides sufficient security, among others by making it difficult to tamper with the state information. Furthermore, using a secure element within the battery module facilitates implementing a public key infrastructure (PKI) scheme, which enables an optimized application flow. In addition, the presently disclosed battery module and corresponding operating method may improve the user experience due to a simplification of the resale process. Furthermore, an increased trust may be achieved by adding a high level of security to the battery module. Also, the costs may be reduced, because an offline check may no longer be needed and therefore there may be no need to ship the battery modules to an external party for an external verification. Finally, a high flexibility may be achieved due to trust provisioning.

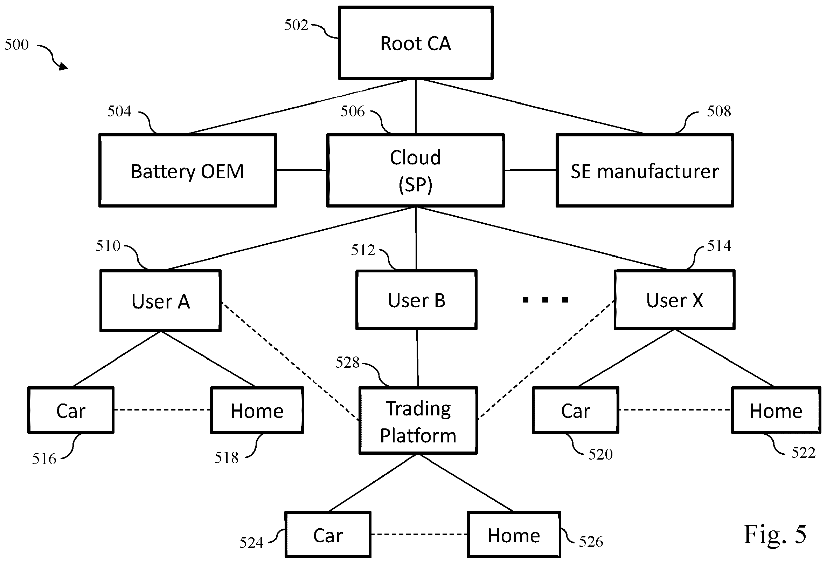

**Fig. 5** shows an illustrative embodiment of a PKI scheme 500. As mentioned above, the use of a secure element within the battery module facilitates implementing a PKI scheme. An example of such a scheme is shown in Fig. 5. In particular, the secure element can be used to store credentials and other security-relevant data which are used in the PKI scheme. The following roles may be defined in the PKI scheme 500. The root certificate authority 502 is an authority that issues root certificates; this authority may for example be a consortium of car original equipment manufacturers (OEMs), battery manufactures, smart home module manufactures, semiconductor companies, or governmental departments. The battery OEM 504 may be a company that produces battery modules. The SE manufacturer 508 may a chip manufacturer, which applies secure trust provisioning. The cloud (service provider SP) 506 may be chosen and authorized by the root CA 502, specifically to sign and certify the requests from the SE manufacturer 508 and the battery OEM 504.

Users A, B to X 510, 512, 514 are end users that buy battery modules, also if these assembled inside a car or in a complete smart home power bank, for example. A car OEM or a smart home battery system vendor can also be a user and sell its systems to the end user. User A 510 may be an owner of an electronic vehicle, who wants to sell a battery module of the vehicle via the battery trading platform 528 maintained by user B 512. In that case, user A 510 may also be registered at the trading platform 528 of user B 512, which registration may be cross-signed based on credentials provided by the cloud (SP) 506. As mentioned, user B 512 may maintain a battery trading platform 528, and may also be a registered user (e.g., with special trading permissions) at the cloud (SP) 506. Users A and X 510, 514 can also register at this platform 528 as authorized users, since they are anyway authorized users of the overall PKI scheme 500. Again, this registration may be cross-signed based on credentials provided by the cloud (SP) 506. Finally, user X 514 may be a potential buyer of a battery module via the battery trading platform 528 of user B 512. User X 514 is also registered at the battery trading platform 528 of user B 512, which registration may also be cross-signed based on credentials provided by the cloud (SP) 506.

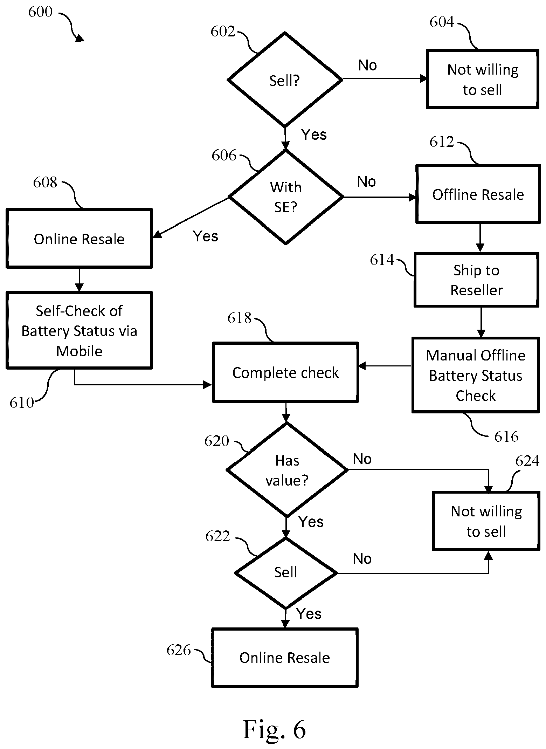

**Fig. 6** shows an illustrative embodiment of a resale process 600. Via a web-based trading platform customers may be able to sell their battery modules via an online resale process 608 or via an offline resale process 612. In particular, the online process 608 may be used if the battery module is equipped with a properly provisioned secure element. If the battery module contains a secure element, the battery module's lifecycle and current state as stored in said element can be trusted, and it is possible to perform a cost-effective self-check 610, directly by the person who wants to sell the module. This self-check 610 can be performed by, for example, authenticating via a mobile phone (e.g., NFC touch of NFC-enabled secure element mounted on or embedded in the battery module) and running the diagnosis as instructed by the trading platform. The diagnosis data can be synchronized with the trading platform backend server (cloud). If the check was successful, the battery module's value can be determined, and the module can be shipped directly to the potential buyer (or to the trading platform distribution platform). Thus, this online process 608 is faster, cheaper and offers a better user experience.

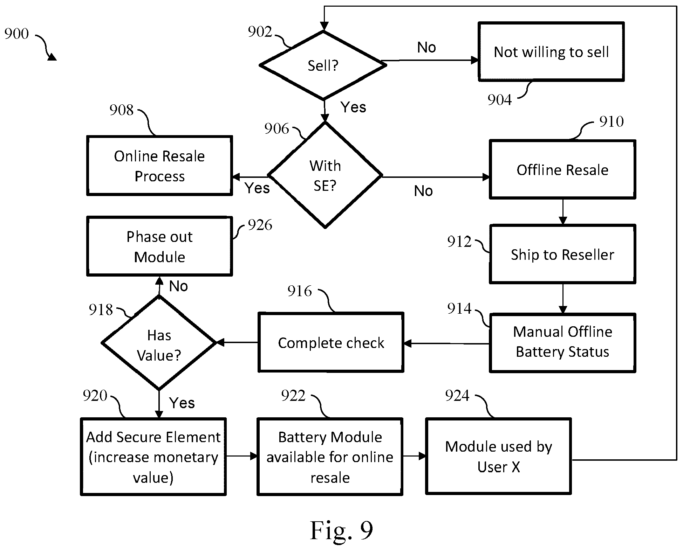

In the offline process 612, so if there is no secure element installed in a battery module, the whole module should be shipped 614 to the reseller/trading platform's service location first. With specific equipment, an offline diagnosis 616 of the state-of-health of the battery can be done and the value of the battery module can be determined. If the battery module has a specific value, it can be shipped to a potential buyer. In that case additional shipments are required, staff and facility should be paid and many other logistics aspects should be considered when re-selling a battery module without a secure element. However, during the offline process 612, a secure element may be added to the battery module, thereby enabling that the module can be resold in the online process 608 in the future. This will be explained with reference to Fig. 9 below.

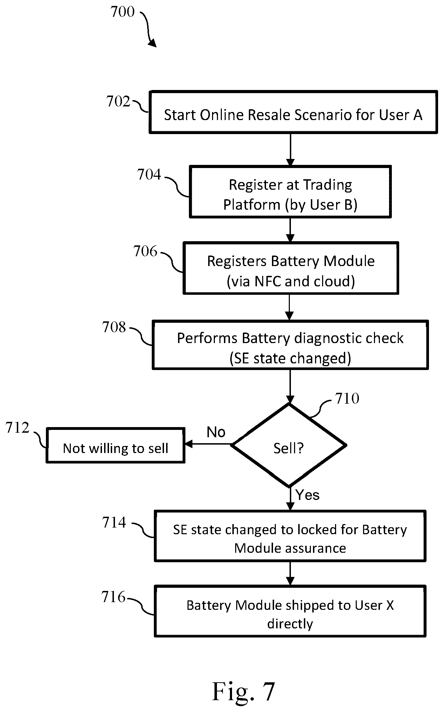

**Fig. 7** shows an illustrative embodiment of an online resale scenario 700 for user A. In this scenario 700, user A should be registered 704 at the online trading platform (which can be operated and owned by user B, for example). This registration may easily be performed via a smartphone application, i.e. a so-called "app". Then, one or more battery modules are registered 706 by user A, for example via the NFC touch of an NFC-enabled secure element mounted on or embedded in the battery module. This information is then sent to the cloud via the app. At the cloud, the information received will be cross-checked with the battery module records available from the cloud (SP). Once all the data is verified, the app will ask the user to perform another NFC touch to trigger the battery module diagnostic self-check 708. During this self-check 708, all the battery module-specific data (e.g., ownership status, lifecycle, re-charging cycles, state-of-health, manufacturer information) may be evaluated and an estimated price of the battery module may be displayed to user A. During this self-check 708, the secure element may also transition to a diagnostic state. If the user is not satisfied with the price, another NFC touch may be required to enable the usage of the battery module. Internally, the secure element will then transition out of the diagnostic state and allow the normal use of the module. If the user is satisfied with the price, another NFC touch may be required to lock 714 the secure element, so that the battery module can no longer be used, and its current state is locked and ready to be shipped.

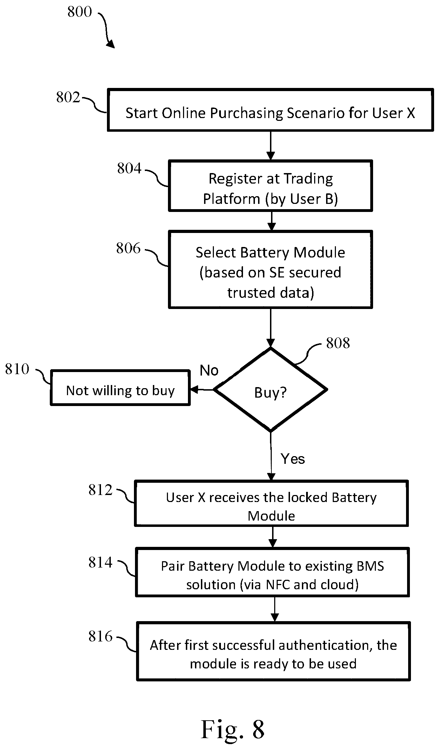

**Fig. 8** shows an illustrative embodiment of an online purchasing scenario 800 for user X. In this scenario 800, user X should register 804 himself at the online trading platform maintained by user B, which can be done easily via a smartphone application (i.e., an app). Via the app, user X can browse through all the battery modules available for purchasing. The complete module information along with price may also be shown, so that the user can make an informed decision. To increase the level of security, the information may be based on the secure trusted data fetch from a secure element, and it may also be verified by the battery service provider. If the user agrees with the price, he or she will select 804 the battery module and decide to buy 808 it. Then, he or she will receive 812 the battery module in the same condition as shown on the online trading platform. To enable the general operation as well as the charging of the battery module, it should be plugged in to an already working BMS unit, and then an NFC touch may trigger the execution of a pairing operation 814. After the first successful authentication 816, the module details may also be synchronized at the root CA cloud server.

**Fig. 9** shows an illustrative embodiment of a process 900 of enabling an online resale of a battery module. As mentioned above, during an offline resale process, a secure element may be added to the battery module, thereby enabling that the module can be resold in an online resale process in the future. More specifically, in the offline path a reseller or trading platform provider may add a secure element to the battery module to increase its reliability and authenticity for future trading options. Once the user decides to sell 902 a battery module without a secure element, it is shipped to the reseller or user B who is managing the battery trading platform. The reseller will perform a complete physical and overall battery health check 916 to establish the base line. If the result of the check is satisfactory, a pre-provisioned secure element (with signed certificates directly from the root CA or indirectly via an entitled intermediate CA) can be embedded 920 into the module to enhance its overall value and make a future resale cheaper and more efficient. The reseller can then trigger the execution of a full diagnostic check of the battery module via the secure element (e.g., using NFC between a smartphone and a passive NFC interface of the secure element), and then the final price of the module can be calculated. The battery module will then become available 922 on the online resale platform, so that any interested user (e.g., User X) can buy it. Subsequently, if the new owner (e.g., user X) decides to resell the battery module, he or she can do so via a faster and more efficient online path (i.e., an online resale process 908 of the kind set forth above).

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: electric vehicle
- 102: battery management system
- 104: battery management system microcontroller
- 106: battery pack
- 108: battery module 1
- 110: battery module controller
- 112: cell 1
- 114: cell x
- 116: battery module x
- 118: battery module controller
- 120: cell 1
- 122: cell x
- 200: smart home
- 202: battery management system
- 204: battery management system microcontroller
- 206: battery pack
- 208: battery module 1
- 210: battery module controller
- 212: cell 1
- 214: cell x
- 216: battery module x
- 218: battery module controller
- 220: cell 1
- 222: cell x
- 300: battery module
- 302: battery module controller
- 304: cell 1
- 306: cell x
- 308: secure element
- 310: interface unit
- 400: method of operating a battery module
- 402: determining, by a battery module controller included in a battery module, a state of one or more battery cells included in the battery module
- 404: storing, by a secure element included in the battery module, data indicative of the state of the battery cells as determined by the battery module controller
- 406: receiving, by an interface unit included in the battery module, a request for evaluating said data from an external user device
- 500: public key infrastructure scheme
- 502: root certificate authority
- 504: battery original equipment manufacturer
- 506: cloud (service provider)
- 508: secure element manufacturer
- 510: user A
- 512: user B
- 514: user X
- 516: car
- 518: home
- 520: car
- 522: home
- 524: car
- 526: home
- 528: trading platform
- 600: resale process
- 602: sell?
- 604: not willing to sell
- 606: with secure element?
- 608: online resale
- 610: self-check of battery status via mobile device
- 612: offline resale
- 614: ship to reseller
- 616: manual offline battery status
- 618: complete check
- 620: has value?
- 622: sell
- 624: not willing to sell
- 626: online resale
- 700: online resale scenario for user A
- 702: start online resale scenario for user A
- 704: register at trading platform (by user B)
- 706: registers battery module (via near field communication and cloud)
- 708: performs battery diagnostic check (secure element state changed)
- 710: sell?
- 712: not willing to sell
- 714: secure element state changed to locked for battery module assurance
- 716: battery module shipped to user X directly
- 800: online purchasing scenario for user X
- 802: start online purchasing scenario for user X
- 804: register at trading platform (by user B)
- 806: select battery module (based on secure element trusted data)
- 808: buy?
- 810: not willing to buy
- 812: user X receives the locked battery module
- 814: pair battery module to existing battery management system solution (via near field communication and cloud)
- 816: after first successful authentication, the module is ready to be used
- 900: process of enabling online resale of a battery module
- 902: sell?
- 904: not willing to sell
- 906: with secure element?
- 908: online resale process
- 910: offline resale
- 912: ship to reseller
- 914: manual offline battery status
- 916: complete check
- 918: has value?
- 920: add secure element (increase monetary value)
- 922: battery module available for online resale
- 924: module used by user X
- 926: phase out module

## Claims

1. A battery module, comprising:
one or more battery cells;
a battery module controller operatively coupled to the battery cells, wherein said battery module controller is configured to determine a state of the battery cells;
a secure element operatively coupled to the battery module controller, wherein the secure element is configured to store data indicative of the state of the battery cells as determined by the battery module controller;
an interface unit operatively coupled to the secure element, wherein said interface unit is configured to receive a request for evaluating said data from an external user device.

2. The battery module of claim 1, wherein the secure element is configured to perform an evaluation of the data in response to receiving said request from the interface unit.

3. The battery module of claim 2, wherein the secure element is configured to perform said evaluation by comparing the stored data with reference data received from the external device and by concluding that the evaluation has a positive result if the stored data match with the reference data within a predefined error margin.

4. The battery module of claim 2 or 3, wherein the interface unit is further configured to transmit an evaluation result to the external user device, wherein said evaluation result is indicative of the evaluation performed on the data.

5. The battery module of any preceding claim, wherein the data indicative of the state of the battery cells includes data indicative of a state of health of the battery cells, data indicative of a lifecycle of the battery cells, data indicative of re-charging cycles of the battery cells, and/or data indicative of a manufacturer of the battery module.

6. The battery module of any preceding claim, wherein the secure element contains signed certificates issued by a root certificate authority.

7. The battery module of any preceding claim, wherein the interface unit is integrated with the secure element.

8. The battery module of any preceding claim, wherein the interface unit is a near field communication, NFC, interface unit.

9. The battery module of any preceding claim, wherein the battery module controller is integrated with the secure element.

10. A battery module resale system, comprising:
the battery module of any preceding claim;
a user device configured to transmit a request for evaluating data to the battery module, wherein said data are indicative of the state of the battery cells included in the battery module.

11. The battery module resale system of claim 10, wherein the user device is an NFC-enabled user device.

12. A method of operating a battery module, comprising:
determining, by a battery module controller included in the battery module, a state of one or more battery cells included in the battery module;
storing, by a secure element included in the battery module, data indicative of the state of the battery cells as determined by the battery module controller;
receiving, by an interface unit included in the battery module, a request for evaluating said data from an external user device.

13. The method of claim 12, wherein the secure element performs an evaluation of the data in response to receiving said request from the interface unit.

14. The method of claim 13, wherein the secure element performs said evaluation by comparing the stored data with reference data received from the external device and by concluding that the evaluation has a positive result if the stored data match with the reference data within a predefined error margin.

15. The method of claim 13 or 14, wherein the interface unit further transmits an evaluation result to the external user device, wherein said evaluation result is indicative of the evaluation performed on the data.

## Amended claims

### Amended claims in accordance with Rule 137(2) EPC.

1. A battery module, comprising:
one or more battery cells;
a battery module controller operatively coupled to the battery cells, wherein said battery module controller is configured to determine a state of the battery cells;
a secure element operatively coupled to the battery module controller, said secure element being a tamper-resistant integrated circuit with installed applications having a prescribed functionality and a prescribed level of security, wherein the secure element is configured to store data indicative of the state of the battery cells as determined by the battery module controller;
an interface unit operatively coupled to the secure element, wherein said interface unit is configured to receive a request for evaluating said data from an external user device.

2. The battery module of claim 1, wherein the secure element is configured to perform an evaluation of the data in response to receiving said request from the interface unit.

3. The battery module of claim 2, wherein the secure element is configured to perform said evaluation by comparing the stored data with reference data received from the external device and by concluding that the evaluation has a positive result if the stored data match with the reference data within a predefined error margin.

4. The battery module of claim 2 or 3, wherein the interface unit is further configured to transmit an evaluation result to the external user device, wherein said evaluation result is indicative of the evaluation performed on the data.

5. The battery module of any preceding claim, wherein the data indicative of the state of the battery cells includes data indicative of a state of health of the battery cells, data indicative of a lifecycle of the battery cells, data indicative of re-charging cycles of the battery cells, and/or data indicative of a manufacturer of the battery module.

6. The battery module of any preceding claim, wherein the secure element contains signed certificates issued by a root certificate authority.

7. The battery module of any preceding claim, wherein the interface unit is integrated with the secure element.

8. The battery module of any preceding claim, wherein the interface unit is a near field communication, NFC, interface unit.

9. The battery module of any preceding claim, wherein the battery module controller is integrated with the secure element.

10. A battery module resale system, comprising:
the battery module of any preceding claim;
a user device configured to transmit a request for evaluating data to the battery module, wherein said data are indicative of the state of the battery cells included in the battery module.

11. The battery module resale system of claim 10, wherein the user device is an NFC-enabled user device.

12. A method of operating a battery module, comprising:
determining, by a battery module controller included in the battery module, a state of one or more battery cells included in the battery module;
storing, by a secure element included in the battery module, data indicative of the state of the battery cells as determined by the battery module controller, said secure element being a tamper-resistant integrated circuit with installed applications having a prescribed functionality and a prescribed level of security;
receiving, by an interface unit included in the battery module, a request for evaluating said data from an external user device.

13. The method of claim 12, wherein the secure element performs an evaluation of the data in response to receiving said request from the interface unit.

14. The method of claim 13, wherein the secure element performs said evaluation by comparing the stored data with reference data received from the external device and by concluding that the evaluation has a positive result if the stored data match with the reference data within a predefined error margin.

15. The method of claim 13 or 14, wherein the interface unit further transmits an evaluation result to the external user device, wherein said evaluation result is indicative of the evaluation performed on the data.
